Europäisches Patentamt

European Patent Office

Office européen des brevets

(19)

(11) Veröffentlichungsnummer : **0 153 427**
**B1**

(12) **EUROPÄISCHE PATENTSCHRIFT**

(45) Veröffentlichungstag der Patentschrift :
08.07.87

(51) Int. Cl.⁴ : **F 16 K 11/22**

(21) Anmeldenummer : **84102000.1**

(22) Anmeldetag : **25.02.84**

(54) **Strangregulierventil.**

(43) Veröffentlichungstag der Anmeldung :
**04.09.85 Patentblatt 85/36**

(45) Bekanntmachung des Hinweises auf die Patenterteilung : **08.07.87 Patentblatt 87/28**

(84) Benannte Vertragsstaaten :
**AT BE CH DE FR GB LI NL SE**

(56) Entgegenhaltungen :
**DE-A- 1 804 340**
**DE-A- 2 249 126**
**DE-C- 1 057 839**
**DE-U- 1 957 140**
**DE-U- 7 409 851**
**FR-A- 1 144 375**
**FR-A- 2 300 976**
**US-A- 2 132 199**

(73) Patentinhaber : **Helmut Meges Armaturen- und Regel-**
**technik GmbH & Co. KG**
**Raiffeisenstrasse 9**
**D-5760 Arnsberg 1 (DE)**

(72) Erfinder : **Meges, Helmut**
**Herbeckeweg 14**
**D-5760 Arnsberg (DE)**

(74) Vertreter : **Dörner, Lothar, Dipl.-Ing.**
**Stresemannstrasse 15**
**D-5800 Hagen (DE)**

## Beschreibung

Die Erfindung bezieht sich auf ein Strangregulierventil, an dessen Gehäuse neben einem Stutzen für die Aufnahme einer Verstellvorrichtung — Stellstutzen — und einem Entleerungsstutzen mindestens ein Druckentnahmestutzen vorgesehen sind.

In größeren Warmwasser-Heizungsanlagen werden üblicherweise horizontal und vertikal abgehende Heizungsstränge zur Versorgung der einzelnen Heizkörper verlegt. In der Regel verlaufen die Hauptversorgungsstränge horizontal, die Heizstränge für die einzelnen Geschosse mit ihren Heizkörpern vertikal. Um in der Heizungsanlage die Wassermenge und den Differenzdruck einstellen, also einen wärmetechnischen Ausgleich vornehmen zu können, wird jeweils ein Strangregulierventil in einem der horizontalen Heizungsstränge montiert. Die Montage kann sowohl vorlaufals auch rücklaufseitig erfolgen. Jedes Strangregulierventil hat mehrere Funktionen, nämlich Absperr- und Drossel- sowie Entleerungs- und Füllfunktion (z. B. DE-A-2 249 126). Außerdem sollen in aller Regel Meßgeräte für die Erfassung des Druckabfalls anschließbar sein. Um die Funktionen erfüllen zu können, muß das Strangregulierventil neben einem Zu- und einem Ablaufstutzen weitere Stutzen aufweisen.

Bei einem bekannten Strangregulierventil der eingangs genannten Art gehen die Stutzen in unterschiedlichen Richtungen von dem Gehäuse ab : An diametral sich gegenüberliegenden Seiten des Gehäuses sind der Zu- und der Ablaufstutzen für das Warmasser vorgesehen. Schräg zu der Mittelachse, die durch Zu- und Ablauf definiert ist, ist in einem Stutzen eine Voreinstelleinrichtung kombiniert mit einer Absperreinrichtung vorgesehen. Das Absperren des Strangregulierventils ist dabei unabhängig von der Voreinstellung möglich. Unter einem anderen Winkel zu der Mittelachse — bei einer anderen bekannten Ausführung auch in einer anderen Ebene — ist der Entnahme- und Füllstutzen vorgesehen. Auf der dem Füllstutzen gegenüberliegenden Seite sind im wesentlichen senkrecht zur Mittelachse zwei Meßstutzen vorgesehen, von denen der eine vor, der andere hinter dem Ventilsitz mündet. Die bekannte Anordnung hat einen wesentlichen Nachteil. Strangregulierventile sind in der Nähe der Wand, oftmals unter der Decke, dann noch benachbart zu anderen Strängen und Strangregulierventilen montiert. Sie sind daher nur schwer zugänglich. Die Zugänglichkeit ist weiter erschwert, wenn ringsum an dem Gehäuse die Stutzen und damit die Bedienungsvorrichtungen angebracht sind.

Hier will die Erfindung Abhilfe schaffen. Die Erfindung, wie sie in den Ansprüchen gekennzeichnet ist, löst die Aufgabe, ein Strangregulierventil zu schaffen, das bei nicht vergrößerten Abmessungen leicht bedienbar, einschließlich leicht und zweckmäßig verstellbar und hinsichtlich der eingestellten Lage einfach ablesbar ist.

Bei der Erfindung sind alle Stutzen, die für die Bedienung des Strangregulierventils notwendig sind, von derselben Seite zugänglich. Gleichgültig wo das Strangregulierventil eingebaut wird, z. B. unter einer Decke oder unmittelbar neben benachbarten Strangregulierventilen, von einer Seite muß es immer zugänglich sein. Auf diese Seite werden beim Einbau die Stutzen gelegt.

Neben der Lage der Stutzen und damit der Betätigungsvorrichtung ist für die einfache Handhabung des Strangregulierventils die Ausgestaltung der Betätigungsvorrichtung von besonderer Bedeutung. Bei einem bekannten Strangregulierventil ist in den Stellstutzen ein Kopfstück geschraubt, mit dessen Hilfe ein Verschlußstück axial geführt ist. Das Verschlußstück ist sowohl von einer Betätigungsspindel als auch von einer Voreinstellspindel bezogen auf einen Ventilsitz in dem Gehäuse verstellbar. Die Betätigungsspindel ist in dem Kopfstück drehbar und axial unverschlieblich gelagert. Sie ragt in das Verschlußstück hinein. Die Voreinstellspindel durchsetzt die Betätigungsspindel in Axialrichtung und ist relativ zu ihr verstellbar.

Bei dem bekannten Strangregulierventil ist mit dem Verschlußstück eine Kegelverlängerung verbunden, die die Betätigungsspindel nach Art einer an der Verschlußstückseite verschlossenen Buchse umgibt und außen mit einem Gewinde versehen ist. Das Gewinde greift in ein Gewinde im Kopfstück ein. Diese Konstruktion ist aufwendig. In der Betätigungsspindel ist eine Innenspindel vorgesehen, die über einen Gewindestift eingestellt wird. Eine Möglichkeit, abzulesen, welche Stellung die Innenspindel bezogen auf die Voreinstellspindel einnimmt, und damit eine Überprüfung der voreingestellten Durchflußmenge, ist nicht möglich.

Auch hier will die Erfindung Abhilfe schaffen. Die in den Ansprüchen 5 bis 7 gekennzeichnete Ausgestaltung verbessert zusätzlich die Bedienbarkeit ; die in den Ansprüchen 8 und 9 gekennzeichnete Ausgestaltung ermöglicht die Ablesbarkeit.

Bei der Ausgestaltung der Erfindung ist das Verschlußstück aus einem Stück ausgeführt, was seinen Aufbau vereinfacht. Antrieb- und Führungsteile sind gegenüber dem Stand der Technik vertauscht, was die Wirkungsweise verbessert. In die Spindel sind Meßeinrichtungen integriert, was den Aufbau des Strangregulierventils weiter vereinfacht.

Im folgenden wird die Erfindung anhand einer lediglich einen Ausführungsweg darstellenden Zeichnung näher erläutert. Es zeigt

Figur 1 einen Axialschnitt durch ein Strangregulierventil ;

Figur 2 die Ansicht eines Handrades für die Verstellvorrichtung — Ansicht X in Fig. 1 — ;

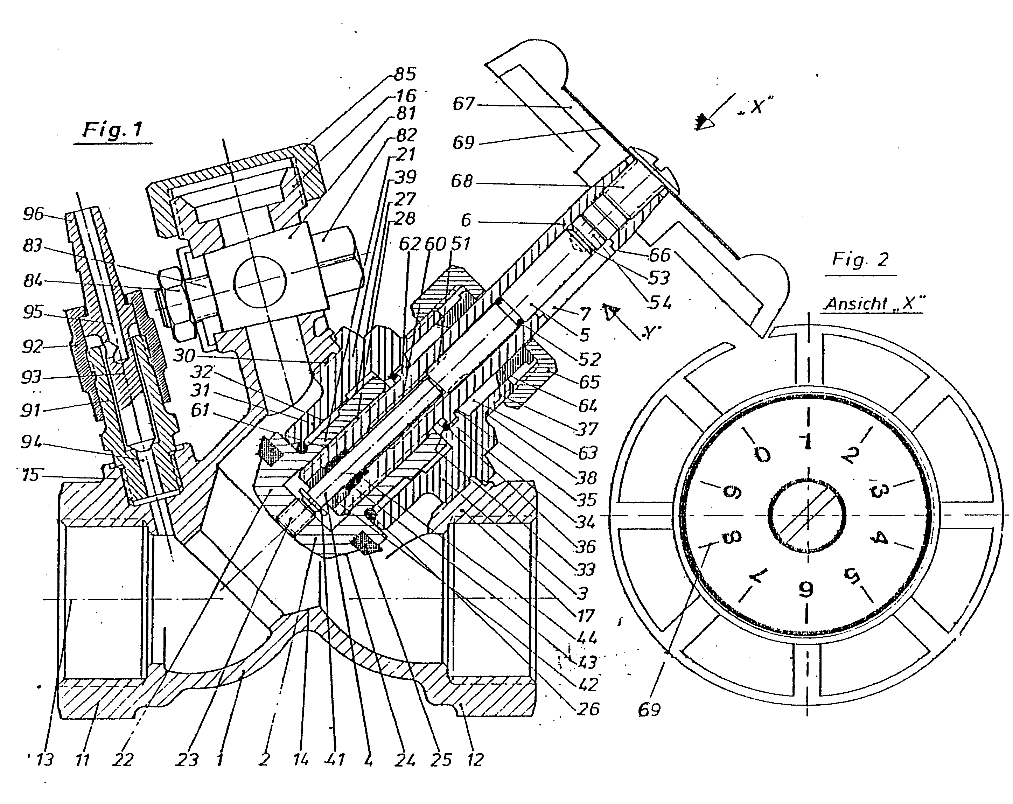

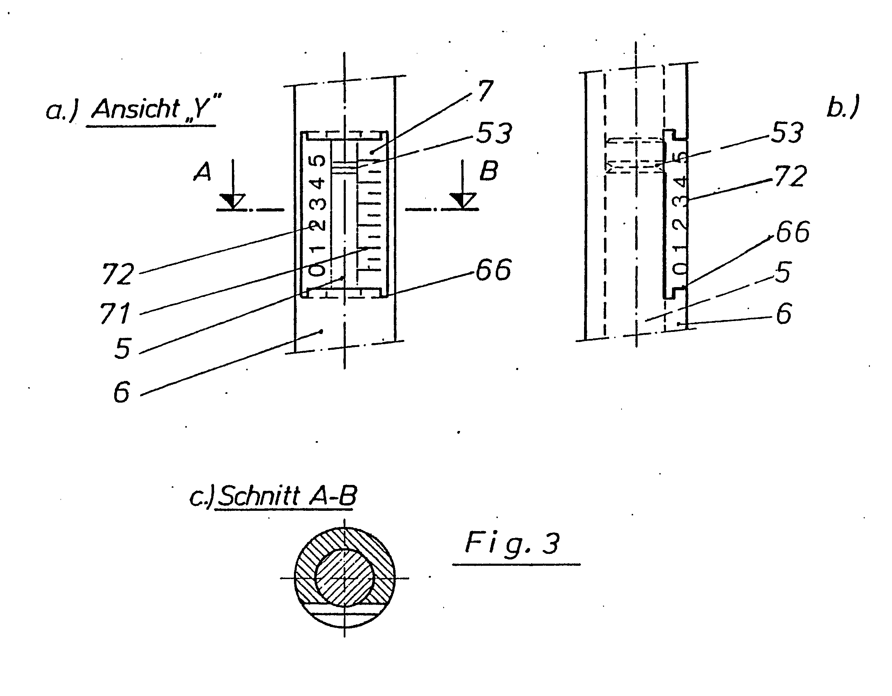

Figur 3 in gegenüber Fig. 1 und 2 vergrößerter Darstellung die Ansicht einer in die Verstellspindel eingebrachten Meßeinrichtung, und zwar

a) in Ansicht « Y » in Fig. 1 ;

b) in einer gegenüber a) um 90° verdrehten Ansicht ;

c) in einem Schnitt A-B durch a).

Das als Ausführungsbeispiel gewählte Strangregulierventil weist ein Gehäuse 1 mit einem Zulaufstutzen 11 und einem Ablaufstutzen 12 für das Warmwasser auf. Der Zulaufstutzen 11 und der Ablaufstutzen 12 sind in der Mittelachse 13 des Gehäuses 1 angeordnet. Im Innern des Gehäuses 1 ist ein Ventilsitz 14 ausgebildet. Die Mittelsenkrechte des Ventilsitzes 14 verläuft etwa unter einem Winkel von 45° zu der Mittelachse 13. In Strömungsrichtung des Warmwassers vor dem Ventilsitz 14 ist ein Druckentnahmestutzen 15 vorgesehen, hinter dem Ventilsitz 14 ein Entleerungsstutzen 16. Druckentnahmestutzen 15 und Entleerungsstutzen 16 sind im wesentlichen parallel zueinander angeordnet. Sie schließen mit dem Ablaufstutzen 12 etwa einen Winkel von 105° ein. In der Mittelsenkrechten zu dem Ventilsitz 14 ist ein Stutzen 17 für die Aufnahme einer Verstellvorrichtung, nachfolgend als Stellstutzen bezeichnet, vorgesehen. Sämtliche vorgenannten Stutzen, insbesondere der Druckentnahmestutzen 15, der Entleerungsstutzen 16 und der Stellstutzen 17, sind in derselben Ebene auf derselben Längsseite des Gehäuses 1 angeformt. Der Stellstutzen 17 und der Entleerungsstutzen 16 münden auf der Ablaufseite des Ventilsitzes 14 unmittelbar benachbart. Der Druckentnahmestutzen 15 mündet auf der Zulaufseite des Ventilsitzes 14. Auf diese Weise wird ein zusätzlicher Stutzen für Messungen eingespart : Der Entleerungsstutzen 16 kann gleichzeitig als Meßstutzen verwendet werden. Die beschriebene Anordnung ergibt eine leicht zugängliche, bedienbare und ablesbare, dabei kompakte Bauweise des Strangregulierventils.

Relativ zu dem Ventilsitz 14 ist ein Verschlußstück 2 verstellbar. Das Verschlußstück 2 ist einstückig ausgeführt. Es hat die Form einer Buchse 21, an die ein Bodenteil 22 größeren Durchmessers als die Buchse 21 angeformt ist. Mittig ist von der Stirnseite des Bodenteils 22 eine Justierschraube 23 eingeschraubt. Den stirnseitigen Randbereich des Bodenteils 22 bildet eine metallische Dichtfläche 24, die in Richtung der Buchse von einer Dichtung 25 begrenzt ist. Am schulterförmig ausgebildeten Übergang zwischen Bodenteil 22 und Buchse 21 liegt eine Rückdichtung 26 in Form eines O-Rings an. Die Außenfläche der Buchse 21 bildet ein Mehrkant 27. Die Innenfläche des Verschlußstücks 2 ist mit einem Gewinde 28 versehen.

In den Stellstutzen 17 ist ein Kopfstück 3 geschraubt. Ein im Innern des Gehäuses 1 angeordnetes Innenstück 31 des Kopfstücks 3 weist einen kleineren Durchmesser als der Stellstutzen 17 auf. Es entsteht so ein ringförmiger Zwischenraum zwischen Außenwandung des Innenstücks 31 und Innenwand des Gehäuses 1. Der Entleerungsstutzen 16 mündet im Bereich dieses Innenstücks 31. Die Innenfläche des Innenstücks 31 bildet ein Mehrkant 32, entlang dem der Mehrkant 27 des Verschlußstücks 2 gleitet. Die Innenfläche des Innenstücks 31 ist an der äußeren Stirnseite durch eine Schulter 33 begrenzt, die als Anschlag für das Verschlußstück 2 dient. Im Anschluß an die Schulter 33 weist das Kopfstück 3 in der Innenfläche eine ringnutförmige Aufnahme 34 auf, die in Axialrichtung außen von einem Innenflansch 35, innen von einem Federring 36 begrenzt ist. An der dem Innenstück 31 entgegengesetzten Stirnseite enthält das Kopfstück 3 einen Gewindestutzen 37 mit einem Außengewinde 38. Ein weiteres Außengewinde 30 weist das Kopfstück 3 etwa in Höhe des Mehrkants 32 auf. Mit diesem Außengewinde 30 ist das Kopfstück 3 in den Stellstutzen 17 geschraubt ; mit einem Außenflansch 39 ist es an der äußeren Stirnseite des Stellstutzens 17 abgestützt.

Mit dem Verschlußstück 2 verschraubt und in dem Kopfstück 3 drehbar aber axial unverschieblich gelagert ist eine Betätigungsspindel 6. In ihrem in das Kopfstück 3 hineinragenden Teil weist die Betätigungsspindel 6 ein Außengewinde 61 auf. Im Anschluß daran ist an der Betätigungsspindel 6 ein Außenflansch 62 vorgesehen, der in die Aufnahme 34 des Kopfstücks 3 hineinragt. Im Anschluß an den Außenflansch 62 sind zwischen Betätigungsspindel 6 und Kopfstück 3 eine Stopfbuchspackung 63 und ein Stopfbuchsring 64 vorgesehen, die von einer Stopfbuchsschraube 65, die mit dem Außengewinde 38 des Kopfstücks 3 verschraubt ist, gehalten sind. In dem über die Stopfbuchsschraube 65 nach außen ragenden Teil ist in die Betätigungsspindel 6 ein Sichtfenster 66 eingelassen. Mit dem freien Ende der Betätigungsspindel 6 ist ein Handrad 67 verbunden, welches mittels einer stirnseitig mit der Betätigungsspindel 6 verschraubten Handradschraube 68 gehalten ist. An ihrer sichtbaren Stirnseite weist das Handrad 67 eine Skala 69 auf. Innen ist die Betätigungsspindel 6 mit einem Innengewinde 60 versehen, welches sich etwa zu beiden Seiten des Außenflansches 62, jedoch im Innern der Betätigungsspindel 6 erstreckt.

Bei Betätigung des Handrads 67 werden das Außengewinde 61 der Betätigungsspindel 6 und das Innengewinde 28 des Verschlußstücks 2 gegeneinander verdreht. Da die Betätigungsspindel über ihren Außenflansch 62 in der Aufnahme 34 in Axialrichtung unveränderlich gehalten ist, die Betätigungsspindel also eine nicht steigende Spindel ist, gleitet der Mehrkant 27 des Verschlußstücks entlang dem Mehrkant 32 des Kopfstücks 3 und öffnet oder schließt je nach Drehrichtung mehr oder weniger den Durchflußquerschnitt des Gehäuses 1 im Bereich des Ventilsitzes 14. Anhand der Skala 69 ist der eingestellte Durchflußquerschnitt überschlägig ablesbar. Bei geschlossenem Ventil steht die Skala 69 auf 0.

In der Betätigungsspindel 6 ist eine Voreinstellspindel 4, 5 geführt. Die Voreinstellspindel 4, 5 ist in Axialrichtung zweigeteilt ausgeführt. Sie ist von einer Innenspindel 4 und einer Gewindespindel 5 gebildet.

Die Innenspindel 4 stößt mit der inneren Stirnseite an die Justierschraube 23 an. Im Bereich der Stirnseite ist in die Innenspindel ein Sicherungsring 41 eingelassen. Die Abdichtung zwischen Innenspindel 4 und Betätigungsspindel 6 im Bereich dieser Stirnseite bilden eine Einpreßbuchse 42, sowie zwei Spindeldichtungen 43, 44 in der Form je eines O-Rings, die in Axialrichtung der Innenspindel 4 hintereinander angeordnet sind. Die Innenspindel 4 hat einen kleineren Durchmesser als die Gewindespindel 5. In dem an die Innenspindel 4 anliegenden Stirnbereich ist die Gewindespindel 5 mit einem Außengewinde 51 versehen, welches in das Innengewinde 60 der Betätigungsspindel 6 eingreift. Im Abstand von dem Ende des Außengewindes 51 weist die Gewindespindel 5 einen Gleitring 52 in der Form eines O-Rings auf. Im Bereich des Sichtfensters 66 in der Betätigungsspindel 6 ist die Gewindespindel 5 mit einer Ringnut 53 versehen, die als Teil der Meßeinrichtung dient. Die äußere Stirnseite der Gewindespindel 5 ist mit einem Innen-Mehrkant 54 versehen.

Beim Drehen des Handrads 67 in Schließrichtung des Ventils wird auf die beschriebene Weise das Verschlußstück 2 mit seinem Dichtteil auf den Ventilsitz aufgesetzt. Sodann wird durch Lösen der Handradschraube 68 das Handrad 67 entfernbar ; es wird der Innen-Mehrkant 54 frei. Mit Hilfe des Innen-Mehrkants 54 wird mit Hilfe der Voreinstellspindel 4, 5 das Strangregulierventil voreingestellt.

Diese Voreinstellung ist abhängig von den Parametern der gesamten Heizungsanlage ; sie ergibt sich aus einer zuvor erfolgten Rohrnetzberechnung. Die vorgenommene Einstellung ist auf noch zu beschreibende Weise hinter dem Sichtfenster 66 über die Ringnut 53 einstell- und ablesbar. In der voreingestellten Lage bildet die Innenspindel 4 einen Anschlag für das Verschlußstück 2. Der Hub des Verschlußstücks 2 ist begrenzt ; die Höhenlage des Verschlußstücks 2 zu dem Ventilsitz 14 eingestellt. Nach Einstellung kann über den Druckentnahmestutzen 15 und den Entleerungsstutzen 16 der Druck vor und hinter dem Ventilsitz 14 gemessen und die vorher berechnete Einstellung überprüft werden.

In der Betätigungsspindel 6 ist das transparente Sichtfenster 66 ausgespart. Das Sichtfenster 66 ist von einem Fenster 7 aus Kunststoff ausgefüllt. In das Fenster 7 sind eine lineare Skala 71 sowie Zahlen 72 eingebracht. Das Fenster 7 ist an seinen Stirnseiten zwischen Betätigungsspindel 6 und Gewindespindel 5 gehalten. Seine Außenfläche ist gleich der Außenfläche der Betätigungsspindel. Im Querschnitt ist das Fenster 7 nach Art eines Kreissegments ausgebildet. Im Mittelteil ist das Fenster 7 innen der Außenfläche der Gewindespindel 5 angepaßt. Bei Betätigung der Gewindespindel 5 wandert die Ringnut 53 entlang der Skala 71. Der voreingestellte Wert ist an den Zahlen 72 ablesbar. Die gekrümmte Ausführung des Fensters 7 bringt dabei den Effekt eine Lupe. Durch die bauliche Ausgestaltung des Strangregulierventils ist das Fenster 7 in dem Sichtfenster 66 jederzeit sichtbar ; somit auch die Ringnut 53 in ihrer Stellung zu der Skala 71.

In den Füll- und Entleerungsstutzen 16, der auch als Druckmeßstutzen verwendbar ist, ist ein Küken 81 eingebracht. Das Küken 81 durchsetzt den Entleerungsstutzen 16 quer. Zu seiner Verstellung weist es einen Kopf 82 auf. Auf der dem Kopf 82 entgegengesetzten Seite ist ein Gewinde 83 vorgesehen, auf das eine Stellschraube 84 geschraubt ist. Bei Nichtbenutzung des Entleerungsstutzens 16 ist er durch eine stirnseitig aufgeschraubte Verstellkappe 85 verschlossen. In der dargestellten Lage verschließt das Küken 81 den Entleerungsstutzen 16. Bei auf dem Ventilsitz 14 aufliegendem Verschlußstück 2 kann das Küken 81 nach Entfernen der Verstellkappe 85 geöffnet und so der jeweilige Heizungsstrang entleert werden, ohne den übrigen Teil der Heizungsanlage außer Betrieb nehmen zu müssen. Anordnung und Lage des Füll- und Entleerungsstutzen 16 ermöglichen die vollständige Entleerung des Heizungsstrangs. Bei gleicher Stellung des Strangregulierventils kann andererseits der Heizungsstrang wieder gefüllt werden. Bei geöffnetem Strangregulierventil kann anstelle der Verstellkappe 85 ein transportables Manometer aufgeschraubt werden und nach Öffnen des Kükens 81 der Druck auf der Ablaufseite des Ventilsitzes 14 gemessen werden.

In den Druckentnahmestutzen 15 ist ein Druckmeßgehäuse 91 eingeschraubt. In das Druckmeßgehäuse 91 ist ein Druckmeßstift 93 eingesetzt, der von einer Betätigungsmutter 92 an dem Druckmeßgehäuse 91 gehalten wird. Das Druckmeßgehäuse 91 weist eine Mittelbohrung 94 auf, die koaxial zu einer Bohrung in dem Druckentnahmestutzen 15 angeordnet ist. Die Mittelbohrung 94 ist von dem Druckmeßstift 93 verschlossen. Über die Betätigungsmutter 92 kann der Druckmeßstift 93 von der Mittelbohrung 94 abgehoben werden und über eine Meßbohrung in einem Schlauchanschlußstück 96 des Druckmeßstifts 93 ein Manometer angeschlossen und so der Druck vor dem Ventilsitz 14 gemessen werden.

**Patentansprüche**

1. Strangregulierventil für Warmwasser-Heizungsanlagen, an dessen Gehäuse (1) neben einem Stutzen (17) für die Aufnahme einer Verstellvorrichtung (Stellstutzen) und einem Entleerungsstutzen (16) mindestens ein Druckentnahmestutzen (15) vorgesehen ist, dadurch gekennzeichnet, daß alle Stutzen (15 ; 16 ; 17) in derselben Ebene auf derselben Längsseite des Gehäuses (1) angeformt sind.

2. Strangregulierventil nach Anspruch 1, dadurch gekennzeichnet, daß der Stellstutzen (17) bezogen auf die von Zulauf- und Ablaufstutzen (11 ; 12) bestimmte Mittelachse (13) des Gehäuses (1) einen Winkel von ca. 45° mit dem Ablaufstutzen (12), die parallel zueinander angeordneten Entleerungsstutzen (16) und Druckentnahmestutzen (15) von ca. 105° einschließen.

7    **0 153 427**    8

3. Strangregulierventil nach Anspruch 1 oder 2, dadurch gekennzeichnet, daß der Stellstutzen (17) und der Entleerungsstutzen (16) auf der Ablaufseite eines Ventilsitzes (14) unmittelbar benachbart, der Druckentnahmestutzen (15) auf der Zulaufseite des Ventilsitzes (14) münden.

4. Strangregulierventil nach einem der Ansprüche 1 bis 3, dadurch gekennzeichnet, daß in den Stellstutzen (17) ein Kopfstück (3) geschraubt ist, dessen im Innern des Gehäuses (1) angeordnetes Innenstück (31) einen kleineren Durchmesser als der Stellstutzen (17) aufweist und daß der Entleerungsstutzen (16) im Bereich des Innenstücks (31) mündet.

5. Strangregulierventil nach Anspruch 4 in dessen Stutzen (17) für die Aufnahme einer Verstellvorrichtung (Stellstutzen) ein Kopfstück (3) geschraubt ist, mit dessen Hilfe ein Verschlußstück (2) axial geführt ist, das von einer in dem Kopfstück (3) drehbar und axial unverschieblich gelagerten und in das Verschlußstück (2) hineinragenden Betätigungsspindel (6) und von einer die Betätigungsspindel (6) in Axialrichtung durchsetzenden und relativ zu ihr verstellbaren Voreinstellspindel (4, 5) bezogen auf einen Ventilsitz (14) in dem Gehäuse (1) verstellbar ist, dadurch gekennzeichnet, daß das Verschlußstück (2) auf seiner Außenfläche mit einem Mehrkant (27), der entlang einem Mehrkant (32) auf der Innenfläche des Kopfstücks (3) gleitet, und auf seiner Innenfläche mit einem Gewinde (28) versehen ist, in das ein Außengewinde (61) der Betätigungsspindel (6) eingreift.

6. Strangregulierventil nach Anspruch 5, dadurch gekennzeichnet, daß die Voreinstellspindel (4, 5) außen ein Gewinde (51) aufweist, das in ein Innengewinde (60) der Betätigungsspindel (6) eingreift, die an ihrem freien Ende mit einem lösbaren Handrad (67) versehen ist, an dem eine Skala (69) angebracht ist.

7. Strangregulierventil nach Anspruch 6, dadurch gekennzeichnet, daß die Voreinstellspindel (4, 5) zweigeteilt in eine auf der Oberfläche glatte Innenspindel (4) kleineren Durchmessers und eine Gewindespindel (5) größeren Durchmessers aufgeteilt ist, von denen die Innenspindel (4) mit einem Ende an dem Verschlußstück (2), mit dem anderen Ende an der Gewindespindel (5) anliegt, und die Gewindespindel (5) auf der der Innenspindel (4) abgewandten Seite mit einer nach Lösen des Handrad schraube (68) betätigbaren Einstellvorrichtung (Mehrkant 54) und einer von außen sichtbaren Markierung (Ringnut 53) versehen ist.

8. Strangregulierventil nach einem der Ansprüche 5 bist 7 dessen Stutzen (17) für die Aufnahme einer Verstellvorrichtung (Stellstutzen) mit einem Verschlußstück (2) versehen ist, das über eine Betätigungsspindel (6) und eine in der Betätigungsspindel (6) bei Drehung in Axialrichtung verstellte Voreinstellspindel (4, 5) bezogen auf einen Ventilsitz (14) in dem Gehäuse (1) bewegbar ist, dadurch gekennzeichnet, daß in der Betätigungsspindel (6) ein Sichtfenster (66) ausgespart ist, das von einem Fenster (7) ausgefüllt ist, welches mit einer linearen Skala (71) versehen ist, und daß in die Voreinstellspindel (4, 5) eine Ringnut (53) eingebracht ist, die bei Voreinstellung des Verschlußstücks (2) entlang der Skala (71) wandert.

9. Strangregulierventil nach Anspruch 8, dadurch gekennzeichnet, daß das Fenster (7) einen kreissegmentförmigen Querschnitt mit einer Außenfläche, die gleich der Außenfläche der Betätigungsspindel (6) ist, und mit einer Innenfläche aufweist, die in Höhe der Gewindespindel (5) angeordnet ist und auf deren Außenfläche teilweise aufliegt.

**Claims**

1. Pipe control valve for hot water heating systems, on the chamber (1) of which at least one pressure bleeder connection (15) is provided next to a connection (17) for receiving an adjusting device (adjusting connection) and a drain connection (16), characterised in that all the connections (15 ; 16 ; 17) are formed on the same longitudinal side of the chamber (1) in the same plane.

2. Pipe control valve according to claim 1, characterised in that, relative to the central axis (13) of the chamber (1) determined by feed and discharge connections (11 ; 12), the adjusting connection (17) forms an angle of approximately 45° with the discharge connection (12), while the drain connection (16) and the pressure bleeder connection (15), which are arranged in parallel, form an angle of approximately 105° with the discharge connection (12).

3. Pipe control valve according to claim 1 or 2, characterised in that the adjusting connection (17) and the drain connection (16) open out directly next to one another on the discharge side of a valve seat (14), while the pressure bleeder connection (15) opens out on the feed side of the valve seat (14).

4. Pipe control valve according to one of claims 1 to 3, characterised in that a head piece (3) is screwed into the adjusting connection (17), the internal part (31) of which head piece, which is arranged inside the chamber (1), has a smaller diameter than the adjusting connection (17), and that the drain connection (16) opens out in the region of the internal part (31).

5. Pipe control valve according to claim 4, into whose connection (17) for receiving an adjusting device (adjusting connection) a head piece (3) is screwed, by means of which a locking piece (2) is axially guided, which locking piece can be adjusted relative to a valve seat (14) in the chamber (1) by an actuating stem (6), which is mounted in the head piece (3) so as not to rotate or move in the axial direction and projects into the locking piece (2), and by a preset stem (4, 5), which passes through the actuating stem (6) in the axial direction and can be adjusted in relation to the latter, characterised in that the locking piece (2) is provided on its external surface with a multiple-cornered part (27), which slides along a multiple-

5

cornered part (32) on the internal surface of the head piece (3), and on its internal surface with a thread (28), in which an external thread (61) of the actuating stem (6) engages.

6. Pipe control valve according to claim 5, characterised in that the exterior of the preset stem (4, 5) comprises a thread (51), which engages in an internal thread (60) of the actuating stem (6), which is provided at its free end with a detachable handwheel (67) to which a scale (69) is fixed.

7. Pipe control valve according to claim 6, characterised in that the preset stem (4, 5) is divided into two parts, an internal stem (4), which has a smooth surface and a smaller diameter, and a threaded stem (5), which has a larger diameter, one end of the internal stem (4) resting against the locking piece (2) and the other against the threaded stem (5), and the threaded stem (5) being provided on its side distant from the internal stem (4) with an adjusting device (multiple-cornered part), which can be actuated after the handwheel screw (68) has been unscrewed, and a marking (annular groove 53) which is visible from the outside.

8. Pipe control valve according to one of claims 5 to 7, the connection (17) of which for receiving an adjusting device (adjusting connection) is provided with a locking piece (2), which can be moved relative to a valve seat (14) in the chamber (1) via an actuating stem (6) and a preset stem (4, 5), which is adjusted in the actuating stem (6) upon rotation in the axial direction, characterised in that a display window (66) is hollowed out of the actuating stem (6) and filled in with a window (7) provided with a linear scale (71), and that an annular groove (53) is formed in the preset stem (4, 5) and moves along the scale (71) when the locking piece (2) is preset.

9. Pipe control valve according to claim 8, characterised in that the window (7) has a cross-section in the shape of a circular segment and comprises an external surface, which matches the external surface of the actuating stem (6), and an internal surface, which is arranged at the level of the threaded stem (5) and rests partly on the external surface of the latter.

**Revendications**

1. Robinet régulateur de tuyauteries pour installations de chauffage à eau chaude, sur le corps (1) duquel est prévue, outre une tubulure (17) pour recevoir un dispositif de réglage (tubulure de réglage) et une tubulure de vidange (16), au moins une tubulure détectrice de pression (15), caractérisé en ce que toutes les tubulures (15 ; 16 ; 17) se trouvent dans un même plan sur le même côté longitudinal du corps (1) avec lequel elles sont réalisées en une pièce.

2. Robinet régulateur de tuyauteries selon la revendication 1, caractérisé en ce que, si l'on se rapporte à l'axe médian (13) du corps (1) déterminé par les tubulures d'alimentation et d'écoulement en aval (11 ; 12), la tubulure de réglage (17) fait avec la tubulure d'écoulement en aval (12) un angle d'environ 45°, alors que la tubulure de vidange (16) et la tubulure détectrice de pression (15) disposées parallèlement l'une à l'autre en font un d'environ 105°.

3. Robinet régulateur de tuyauteries selon la revendication 1 ou 2, caractérisé en ce que la tubulure de réglage (17) et la tubulure de vidange (16) débouchent au voisinage immédiat l'une de l'autre sur le côté aval d'un siège de soupape (14) alors que la tubulure détectrice de pression (15) débouche sur le côté amont du siège de soupape (14).

4. Robinet régulateur de tuyauteries selon l'une quelconque des revendications précédentes, caractérisé en ce que dans la tubulure de réglage (17) est vissée une pièce (3) en forme de tête dont la partie intérieure (31) disposée à l'intérieur du corps (1) présente un diamètre plus petit que la tubulure de réglage (17) et en ce que la tubulure de vidange (16) débouche au niveau de la partie intérieure (31).

5. Robinet régulateur de tuyauteries selon la revendication 4, ayant dans sa tubulure (17) destinée à recevoir un dispositif de réglage (tubulure de réglage) vissée une pièce (3) en forme de tête à l'aide de laquelle est guidé axialement un élément obturateur (2) qui peut être déplacé dans le corps (1), par rapport à un siège de soupape (14), par une broche de manœuvre (6) montée de manière à pouvoir tourner dans la pièce (3) en forme de tête en étant axialement immobile, et par une broche de préréglage (4, 5) s'étendant axialement par la broche de manœuvre (6) et déplaçable par rapport à celle-ci, caractérisé en ce que l'élément obturateur (2) présente sur sa surface extérieure un polygone (27) qui glisse le long d'un polygone (32) prévu sur la surface intérieure de la pièce (3) en forme de tête, et présente sur sa surface intérieure un taraudage (28) dans lequel s'engage un filetage extérieur (61) de la broche de manœuvre (6).

6. Robinet régulateur de tuyauteries selon la revendication 5, caractérisé en ce que la broche de préréglage (4, 5) présente extérieurement un filetage (51) qui s'engage dans un taraudage (60) de la broche de manœuvre (6), laquelle est munie à son extrémité libre d'un volant à main amovible (67) sur lequel est prévue une échelle graduée (69).

7. Robinet régulateur de tuyauteries selon la revendication 6, caractérisé en ce que la broche de préréglage (4, 5) est divisée en une broche intérieure (4) à surface lisse et d'un diamètre relativement réduit et une broche filetée (5) de plus grand diamètre, la broche intérieure (4) prenant appui avec une extrémité contre l'élément obturateur (2) et avec son autre extrémité contre la broche filetée (5), et la broche filetée (5) étant munie, du côté éloigné de la broche intérieure (4), d'un dispositif de réglage (polygone 54) susceptible d'être manœuvré après desserrage de la vis (68) du volant à main, et d'un marquage (rainure annulaire 53) visible de l'extérieur.

8. Robinet régulateur de tuyauteries selon l'une quelconque des revendications 5 à 7, dont la tubulure (17) destinée à recevoir un dispositif de réglage (tubulure de réglage) est munie d'un élément obturateur (2) qui est déplaçable dans le corps (1), par rapport à un siège de soupape (14), par l'intermédiaire d'une broche de manœuvre (6) et d'une broche de préréglage (4, 5) qui se déplace axialement dans la broche de manœuvre (6) en cas de rotation de celle-ci, caractérisé en ce que dans la broche de manœuvre (6) est ménagé un regard (66) qui est rempli d'une fenêtre (7), laquelle est munie d'une échelle graduée (71) et en ce que dans la broche de préréglage (4, 5) est ménagée une rainure annulaire (53) qui en cas de préréglage de l'élément obturateur (2) se déplace le long de l'échelle graduée 71.

9. Robinet régulateur de tuyauteries selon la revendication 8, caractérisé en ce que la fenêtre (7) présente une section en forme de segment circulaire avec une surface extérieure qui est égale à la surface extérieure de la broche de manœuvre (6) et avec une surface intérieure qui est située à la hauteur de la broche filetée (5) et prend partiellement appui sur la surface extérieure de celle-ci.

Fig. 1

Fig. 2

Ansicht „X"

a.) _Ansicht „Y"_

7
53
A
B
72
71
5
6
66

b.)

53
72
66
5
6

c.) _Schnitt A-B_

_Fig. 3_

0 153 427